# EUROPEAN PATENT APPLICATION

(11) **EP 1 460 471 A1**
(43) Date of publication of application: **22.09.2004**
(21) Application number: 04075821.1
(22) Date of filing: 15.03.2004
(51) Int. Cl.: G02F 1/13, G02F 1/133, G09F 9/00

(54) **Display screen structure with improved impact protection and minimised reflection problems**

(30) Priority: 20.03.2003 GB 0306337
(71) Applicant: Global display Solutions S.p.A., 36073 Cornedo Vicentino (Vicenza) (IT)
(72) Inventor: Cariolato, Giovanni, 36073 Cornedo Vicentino (Vicenza) (IT)
(74) Representative: Coppo, Alessandro

(57) **Abstract**

A display screen structure (2) comprising a display screen assembly (4), which includes a display screen (6) and a protective panel (12) having an inner face (20) positioned, at a predetermined distance, in front of an outer face of the display screen (6); a layer (14) of filler transparent material is provided between the inner face (20) of the panel and the outer face of the display screen (6), in order to maintain or improve the resistance to damage of the display screen (6) by the provision of the protective panel (12) and also to solve or minimise the problems caused by refraction, reflection and contrast which exist in the conventional screens with such protective panels.

## Description

The invention which is the subject of this application is an improvement to a display screen structure and particularly, although not necessarily exclusively, to a screen structure of the type which includes a flat screen and a protective panel positioned in front of the same.

Display screens can be provided in many sizes and indeed shapes and can be put to many different uses.

In certain environments, typically where the screens are put to commercial use as part of commercial products and/or as part of products used in environments where there is a risk of damage, the screens are provided with a protective panel positioned in front of the display screen to lie between the display screen and the person viewing the display.

These panels can be made from a suitable transparent material such as glass or acrylic.

These panels serve to protect or minimise the screen from impact damage due to accidental contact if, for example, the screen is in use in industrial or maritime environments and/or malicious damage due to vandalism if, for example, the display screen is used as part of an information installation or as part of an automated telling machine (ATM).

One problem which is known is that the provision of the protective panel can cause difficulty to the viewer of the material on the display screen due to the properties of refraction between the protective panel, the display screen and, if provided, an air gap between the panel and the display screen.

This can cause the material to be almost illegible and hence of very little practical benefit to the person viewing the display.

A further problem is that the provision of the protective panel means that the front of the display screen, typically a Liquid Crystal Display (LCD) screen can be difficult to cool and hence cause overheating of the display screen or at least require more expensive cooling means than desired to be provided.

In some instances it is known to try and reduce the problems caused by refraction by minimising the air gap between the protective panel and the display screen.

However, problems still exist in the viewing of the material displayed on the display screen due to the problems of loss of contrast when the material on the screen is being viewed through the air gap which is still present between the display screen and protective panel and possible internal reflection.

It should be noted that reference hereonin to a protective panel includes the provision of a touch screen panel, the main purpose of which is to act as a means for interaction with the screen rather than a purely protective function and the reference to a protective panel throughout the description is a nonlimiting manner.

The aim of the present invention is to provide a display screen structure of a type which maintains or improves the resistance to damage of the display screen by the provision of a protective panel and also solves or minimises the problems caused by refraction, reflection and contrast which exist in the conventional screens with such protective panels.

In a first aspect of the invention there is provided a display screen structure, said structure including a display screen, a protective panel positioned in front of the display screen and allowing the viewing of material on the display screen therethrough and wherein there is provided between the inner face of the protective panel and the display screen, a layer of filler material which is substantially transparent to allow the material on the display screen to be viewed through the layer of filler material and the panel.

In one embodiment the filler material is an encapsulating material and preferably one which is stable upon exposure to ultra violet light.

In one embodiment the filler material used is of the type commonly referred to as any or any combination of an epoxy gel material, a clear soft gel epoxy encapsulant, or epoxy resin.

In one embodiment the filler material is provided in an enclosed volume defined by the outer face of the display screen, the inner face of the protective panel and a bead or beads of material which form a gasket or gaskets which define the side wall.

Typically the gaskets are formed of a material provided in a substantially linear path around the periphery of the protective panel and the display screen.

Typically the depth of the gaskets applied acts to space the protective panel and display screen apart to a set distance and seal the same together to retain and confine the filler material in the said volume prior to the filler material being cured.

Preferably, when cured, the filler material has a degree of elasticity to allow limited movement of the LCD screen and therefore prevent distortion of the image on the LCD which may occur due to, for example, temperature change.

In one embodiment, the material used to form the gaskets is a polymer material, preferably of a colour, such as black, to merge with the colour of the display screen.

Typically the display screen is a flat screen with a surrounding metal frame.

Yet further, the display screen is typically an LCD display screen with a flexible face which is protected by the protective panel from damage.

The protective panel is preferably manufactured from any suitable material such as glass, acrylic or the like and may be provided for touch screen functionality.

In a further aspect of the invention there is provided a method of forming a display screen structure, said structure including a display screen and a protective panel mounted a predetermined distance in front of the display screen, said method comprising the steps of applying a bead of material to the inner face of the protective panel and/or the outer face of the screen to form a gasket, said gasket being positioned around the periphery of the display screen, bringing the protective panel and the display screen together to contact opposing faces of the gasket at a predetermined distance apart and introducing a filler material to substantially fill the volume defined between the inner face of the protective panel, the outer face of the display screen and the gasket.

In one embodiment two linear beads of material are provided to form two gaskets.

Typically the filler material is introduced in a fluid state to fill the volume and subsequently cured. In one embodiment the material used to form the gasket is applied in a fluid state and subsequently cured.

In one embodiment the filler material is introduced to fill the volume once the gasket material has cured and sealed the volume.

The filler material is then injected through the gasket at one or a plurality of locations, to introduce the filler material into the volume and fill the same.

Typically the injection is performed through an aperture formed by the injection means which, when the injection means have been removed, reseals due to the resilience of the frame material or additional material can be applied to the frame to seal the aperture, or the curing of the filler material prevents leakage.

In one embodiment, the quantity of the filler material required to fill the volume of known dimension is calculated and a metering system is provided to monitor the quantity of material entering the volume.

In one embodiment, the depth of the filler material is 3 mm or greater but may be altered to suit specific requirements.

Specific embodiments of the invention are now described with reference to the accompanying drawings; wherein
- figures 1A and 1B illustrate a display screen structure in accordance with the invention in one embodiment;
- figures 2-4 illustrate the steps followed in a method for forming the structure in accordance with one embodiment of the invention.

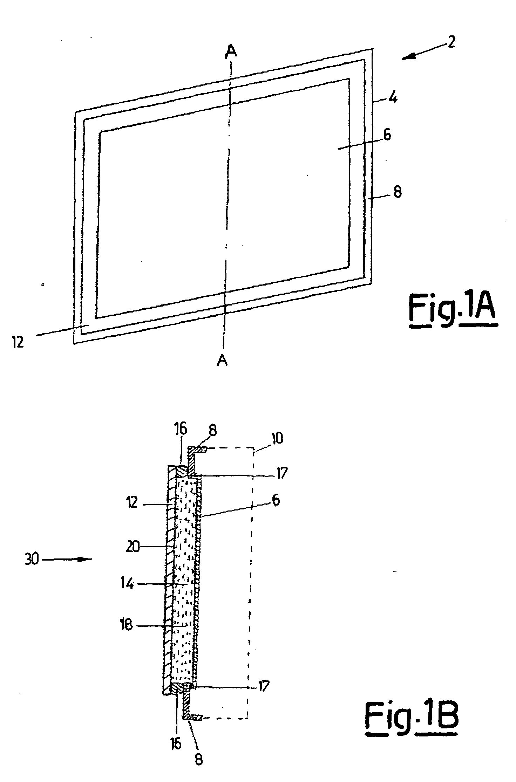

Referring firstly to figures 1A and 1B there is illustrated a display screen structure in accordance with one embodiment of the invention.

The structure 2 comprises a display screen assembly 4 which can be of any conventional design and most typically including a display screen 6 of the flat LCD type as shown, a metal frame 8 and to the rear of the same the control means and cooling means 10 for the structure which can be of any conventional form.

To the front of the display screen 6 there is provided a protective panel 12 and the panel 12 is separated from the display screen by a filler material 14 and gasket 16 as shown particularly in figure 1B which is a cross section along line A-A of figure 1A.

The gasket 16 and subsidiary gasket 17 between the LCD screen and the frame 8 are formed from a material applied in a fluid state and subsequently cured.

When cured, the gaskets define the volume 18 in conjunction with the inner face 20 of the panel 12, the display screen 6 and frame 8.

With the volume defined, the filler material 14 is introduced to fill the volume.

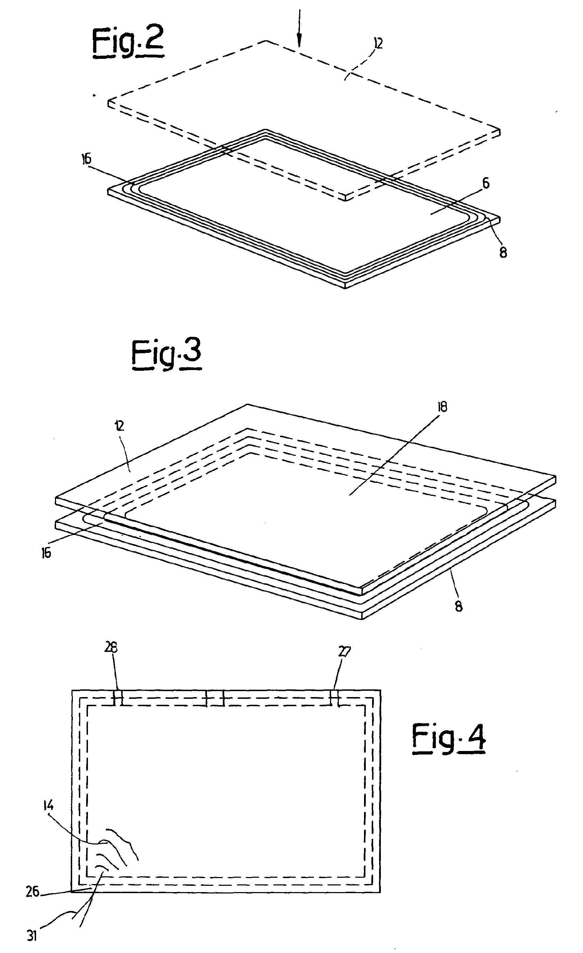

Figures 2-4 illustrate one embodiment of a method used to form the display screen structure 2 in more detail.

Figure 2 illustrates how in the first instance the material used to form the gaskets 16, 17 is applied around the periphery of the display screen 6 and frame 8 in the appropriate locations.

Once applied, the protective panel 12 is brought into position, typically via a jig mechanism, to come into contact with the gasket 16.

Sufficient material is applied such that when the protective panel is brought to lie in the required position spaced from the display screen, the gasket contacts the protective panel along the length of the same and hence seals the protective panel 12 with the display screen 6 and frame 8.

At this stage the gasket 16 is cured, typically by a suitable curing step and the structure as illustrated in figure 3 is obtained with the volume 18 defined and sealed and, at this stage, filled with air.

Once the gasket is cured, the filler material 14 is introduced and one method of doing this is illustrated in figure 4.

At this stage the volume 18 is air filled.

An injection locations 26 is defined in the gasket 16 and a needle or other suitable formed injection means 31 are introduced to form an aperture through the gasket and depend into the volume 18.

In addition, an aperture or apertures 27, 28 are provided in the gasket to allow the escape of air from the volume as the volume is filled by the filler material.

The filler material 14 is introduced to fill the volume with the technique used being that best suited to the particular requirements and environmental conditions, but may include drawing a vacuum in the volume, tilting the structure at a particular angle with respect to the injection locations and the like.

In any case the aim is to ensure that the volume 18 is completely filled with the filler material and that the generation of air bubbles or other visually detectable flaws are prevented from occurring.

The gasket prevents unwanted leakage of the filler material from the volume.

The filler material is then cured, with the curing stage being monitored to ensure that no damage is caused to the display screen or components of the structure.

Once formed, there is provided a display screen structure in which the filler material and gasket material are solid or substantially solid masses and integral with the display screen structure, with the filler material being substantially transparent and the frame material of a colour so as to merge with the colour of the display screen.

The provision of the filler material between the display screen and protective panel improves the visual appearance of the display screen by the person viewing the same in the direction 30 indicated in figure 1B by acting to improve the contrast of the display screen and the integral nature of the filler material with the protective panel and display screen means that the problems caused by refraction and/or internal reflection between elements are overcome.

Thus there is provided a display screen structure which has considerable advantage over conventional screens, with improved functionality and the same can be successfully integrated into apparatus without the need for any significant adaptation of the apparatus.

Further advantages are that there is provided what acts as a one piece construction in front of the display screen which can be of advantage in touch screen systems, may allow any thickness of rigid protection panel to be used, and generally improves the ruggedness of the display screen structure which is exposed to the user, while at the same time improving the performance of what can be a standard display screen in terms of visual use, without requiring the use or purchase of more expensive display screens.

## Claims

1. Display screen structure (2) comprising a display screen assembly (4), which in turn includes a display screen (6) and a protective panel (12) having an inner face (20) positioned, at a predetermined distance, in front of an outer face of the display screen (6) and allowing the viewing of material on the display screen (6) therethrough, **characterised in that** a layer of filler transparent material (14) is provided between said inner face (20) of the protective panel (12) and said outer face of the display screen (6).

2. Display screen structure (2) as claimed in claim 1, **characterised in that** said filler material (14) is an encapsulating material and preferably one which is stable upon exposure to ultra violet light, such as epoxy gel material, clear soft gel epoxy encapsulant, epoxy resin or any combination of epoxy gel material, clear soft gel epoxy encapsulant and epoxy resin.

3. Display screen structure (2) as claimed in claim 1, **characterised in that** said filler material (14) is provided in an enclosed volume (18) defined by said outer face of the display screen (6), said inner face (20) of the protective panel (12) and at least one bead of material which forms at least one gasket (16, 17) which defines a side wall.

4. Display screen structure (2) as claimed in claim 3, **characterised in that** said at least one gasket (16, 17) is formed of a material provided in a substantially linear path around the periphery of said protective panel (12) and said display screen (6).

5. Display screen structure (2) as claimed in claim 3, **characterised in that** said at least one gasket (16, 17) is provided between said display screen (6) and a metal frame (8) surrounding said display screen (6).

6. Display screen structure (2) as claimed in claim 4, **characterised in that** said material used to form said at least one gasket (16, 17) is a polymer material, preferably of a colour, such as black, to merge with the colour of the display screen (6).

7. Display screen structure (2) as claimed in claim 1, **characterised in that** said display screen (6) is a flat screen with a surrounding metal frame (8) and preferably an LCD display screen with a flexible face which is protected by the protective panel (12) from damage, said protective panel (12) being preferably manufactured from any suitable material such as glass, acrylic or the like and being preferably provided for touch screen functionality.

8. Method of forming a display screen structure (2), said structure (2) including a display screen (6) and a protective panel (12) having an inner face (20) mounted, at a predetermined distance, in front of an outer face of the display screen (6), **characterised in that** said method comprises the steps of:
• applying at least one bead of material to said inner face (20) of the protective panel (12) and/or said outer face of the display screen (6) to form at least one gasket (16, 17), said at least one gasket (16, 17) being positioned around the display screen (6);
• bringing the protective panel (12) and the display screen (6) together to contact opposing faces of said at least one gasket (16, 17) at said predetermined distance apart, and
• introducing a layer of filler material (14) to substantially fill the volume (18) defined between said inner face (20) of the protective panel (12), said outer face of the display screen (6) and said at least one gasket (16, 17).

9. Method as claimed in claim 8, **characterised in that** two linear beads of material are provided to form two gaskets (16, 17).

10. Method as claimed in claim 8, **characterised in that** said filler material (14) and the material used to form said at least one gasket (16, 17) are introduced in a fluid state to fill the volume (18) and subsequently cured.

11. Method as claimed in claim 10, **characterised in that** the filler material (14) is introduced to fill the volume (18) once the gasket material has cured and sealed the volume (18), said filler material (14) being injected through said at least one gasket (16, 17) at at least one locations (26) to introduce the filler material (14) into the volume (18) and fill the same.

12. Method as claimed in claim 11, **characterised in that** said filler material (14) is injected through an aperture formed by injection means (31) which, when said injection means (31) have been removed, reseals due to the resilience of the metal frame (8) surrounding the display screen (6) or additional material can be applied to said metal frame (8) to seal the aperture, or the curing of said filler material (14) prevents leakage.

13. Method as claimed in claim 8, **characterised in that** the quantity of the filler material (14) required to fill the volume (18) of known dimensions is calculated and a metering system is provided to monitor the quantity of filler material (14) entering the volume (18).

14. Method as claimed in claim 8, **characterised in that** said layer of filler material (14) has a predetermined depth.
